# EUROPEAN PATENT APPLICATION

(11) **EP 2 765 543 A1**
(43) Date of publication of application: **13.08.2014**
(21) Application number: 13154804.2
(22) Date of filing: 11.02.2013
(51) Int. Cl.: G06Q 10/06, G06Q 10/10, G06Q 50/00

(54) **Method and system for matching technical needs to solutions**

(71) Applicant: BASF SE, 67056 Ludwigshafen (DE)
(72) Inventor: Baus, Ingmar, 67117 Limburgerhof (DE)

(57) **Abstract**

A method for matching technical needs to solutions includes the use of an innovation exchange network to receive a project description having at least one unmet technical need, wherein the unmet technical need is described by a plurality of parameters. Project categorizations are assigned to the project description based on the project description and the parameters. The project description is posted for review by participating experts. One or more of the participating experts are identified as having expertise potentially relevant to the project description based upon the assigned project categorizations. Those identified participating experts are notified of the posted project description. The innovation exchange network then receives a proposed solution to the unmet technical need from one or more of the participating experts.

## Description

### BACKGROUND OF THE INVENTION

### 1. Field of the Invention

The field of the present invention is computer-assisted methods and systems for use by multi-business unit companies, through which technical needs may be internally publicized and solutions to those technical needs identified for the benefit of the company and its customers.

### 2. Background

Networked systems for creating a community of people to solve problems are generally known. One example of such a system is a web-based community matching scientists to relevant technical challenges faced by companies. It provides an online forum enabling companies to reward scientific innovation through financial or other incentives by matching "seekers" with "solvers." Scientists register as "solvers" to gain access to posted technical challenges matching their skills and interests. The solvers may also receive professional recognition and significant financial rewards for finding solutions to the technical challenges. Companies seeking technical solutions register as "seekers" and post challenges for which a solution is sought. In doing so, the seekers gain immediate access to a pool of talent that may be otherwise unavailable to them.

In operation, seekers post technical challenges to a website. Each challenge includes sufficient information to describe the challenge, the reward, the criteria and/or other challenge related information. Certain aspects of this information may be kept confidential. Some information may be available to all solvers, and some information may be available to only solvers meeting certain criteria. In some cases only a summary of the information is initially provided to the solvers.

When such a networked system is implemented internally within an umbrella organization having multiple-business units representing diverse technologies, significant changes can be made to take advantage of the non-public circumstances. For example, within an umbrella organization, a known technology within one business unit may be repurposed to find a new market in another business unit. By repurposing a known technology in this manner, the new market may be developed more rapidly and less expensively. The larger the umbrella organization, and the more diverse the different business units, the greater opportunities exist to leverage known technologies in more diverse business units.

In addition, with the networked system being a non-public network, employees are already being compensated for their work within the company, and they often have a set compensation structure for technical innovations they help develop, so that compensation to the solution provider is no longer an issue. Also, employees are generally already subject to non-disclosure agreements as a condition of employment, so that except in cases where a security clearance is required, the confidentiality of information on the solution network is no longer an issue. In some instances, these non-public circumstances may also involve trusted business partners, even if those business partners are not fully under the umbrella organization. These advantages are discussed in the ensuing description.

### SUMMARY OF THE INVENTION

The present invention is directed toward a method and system for matching technical needs to solutions. The advantages of this system are best realized within the umbrella of an umbrella organization, including wholly owned business units, and possibly also including trusted business partners. Within and using a computer network to exchange needs and innovative information, unmet technological need within the context of project description are received by the network and posted for viewing by participating experts. The participating experts who review the project description, and the unmet technological needs, may thereafter propose a solution for meeting the unmet technological needs, and the proposed solution is received by the network. All proposed solutions that are received may be forwarded to the person or group that originally provided the project description.

In a first separate aspect of the present invention, the network receives the project description along with a plurality of parameters to describe the unmet technical need. The network assigns project categorizations to the project description based upon the description itself and the received parameters. Using the project categorizations, the network identifies one or more participating experts who have expertise potentially relevant to the project description, and those identified experts are then notified of the posted product description. In identifying experts to match up with the project description, the network may maintain a database of expertise for the participating experts. Such a database may include expert categorizations assigned to each participating expert, with the expert categorizations being based upon one or more of the curriculum vitae for each expert, publications by each expert, work history of each expert, and categorizations selected by each expert.

In a second separate aspect of the present invention, the computer network includes one or more servers configured to communicate with each of a plurality of business networks, each business network being operated by one of a business group or business unit, each being within the umbrella organization. The network may be organized into, and managed and hosted by, a centralized database server, or it may be organized into a plurality of servers which operate as and host the database across a distributed network.

In a third separate aspect of the present invention, either of the foregoing aspects may be employed in combination.

Accordingly, an improved method and system for matching technical needs to solutions are disclosed. Advantages of the improvements will be apparent from the drawings and the description of the preferred embodiment.

### BRIEF DESCRIPTION OF THE DRAWINGS

In the drawings, wherein like reference numerals refer to similar components:

Fig. 1 is a flowchart illustrating a method for matching technical needs to solutions.

Fig. 2 illustrates a centralized server network implementation of the method of Fig. 1.

Fig. 3 illustrates a distributed computing network implementation of the method of Fig. 1.

Fig. 4 illustrates an organizational overview for the method of Fig. 1.

### DETAILED DESCRIPTION OF THE PREFERRED EMBODIMENTS

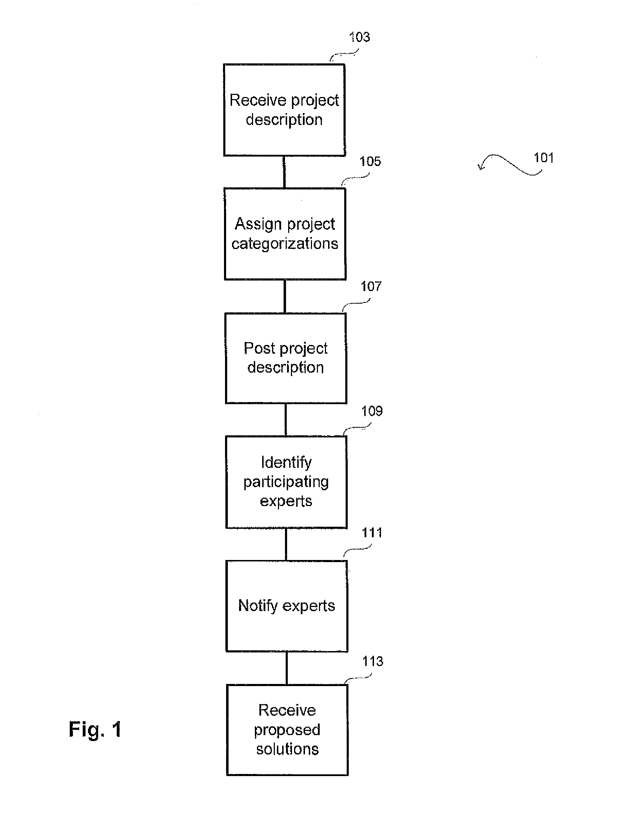

Turning in detail to the drawings, Fig. 1 illustrates a process 101 for matching the unmet technical needs of a project description with an expert and obtaining proposed solutions for one or more of the unmet technical needs. The process 101 is performed by and with an innovation exchange network, and it begins upon receipt 103 of the project description by the innovation exchange network. The project description preferably describes the overall project that is being performed, as well as any unmet technical needs for which a solution is needed to complete the project. Since this process is taking place entirely within the umbrella organization, the project description may be much more complete, without concerns of unwanted disclosure outside the organization, than if it was being exposed to the public as is intended for the process described in U.S. Patent Publication No. 2009/0299760 A1. In addition, as part of the receiving process 103, the submitter is asked to describe the unmet technical need by a plurality of parameters. These parameters may be drawn from a set of pre-existing technical categories, and an opportunity to provide a short description of the unmet tech, based on keywords, not limited by pre-existing choices, or on free-form writing, may also be provided to the submitter.

In many instances, the project description and the unmet technical needs will be driven by the customer of one of the business units under the umbrella organization. In such instances, employees within the business unit servicing the customer will work closely with the customer to develop the technical specifications for the project, and even to identify specific technical needs that cannot be presently met within or by that particular business unit. The best results in the overall process are most likely to be obtained if, at this stage, the employees of the business unit working with the customer are able to identify the unmet technical needs and define those needs sufficiently so as to describe realistic challenges. The better and more accurately a technical need is described, the more likely that need may be overcome by implementation of technologies known in other business units within the umbrella organization, assuming such know-how exists somewhere within the organization.

The project description may have the following parts to enable more consistent descriptions of the project being presented, and thus, ideally, enable faster understanding of the project by experts reviewing the description:

1) Description of the scene. This describes the industry and/or technology sector in which an unmet technical need has arisen. Preferably, this description also provides information about the size of the industry and/or technology sector. In doing so, the project description lends itself to a cost/benefit analysis by the reviewing experts.

2) Description of the context. This section more fully describes the conditions and/or processes in the scene that have given rise to the unmet technical need.

3) Origin of the problem. This section describes the results and/or facts arising from the context conditions and/or processes. It is these results and/or facts that the solution is intended to change.

4) Problem statement. This is intended to be a precise statement of the problem that the results and/or facts create. For example, the negative impact of the results and/or facts may be described, along with the amplitude of the negative impact. The identity or relationship of the party experiencing the negative impact may also be described. In addition, a more specific statement about the size and impact of the unmet technical need is preferred in this section, recognizing that impact may be any one or more of economical, ecological, sociological, and the like.

5) Challenge teaser. This is preferably a short and precise reformulation of the problem statement, positively reformatted in the form of a question. For example, the question may be phrased so as to indicate that a desired effect is sought, or that a particular goal is to be achieved. This teaser preferably represents an opportunity to better steer the direction of the solution to the desired outcome.

6) Further problem details. This section provides the technical details of the project being presented. It is also an opportunity to present exceptions to the problem statement and under what conditions those exceptions occur.

7) Countermeasures. This section is intended to present the description of countermeasures, or solutions that partially, but not wholly satisfactorily, solve the problem presented. For example, the type of countermeasures may be described, along with the strength and weaknesses of those countermeasures and in which ways they do not solve the problem at hand.

8) Description of the ideal solution. This section is a statement of the constraints that are present, and which should serve as guidelines, for implementation of the ideal solution. Such constraints may be technical, financial, process driven, results driven, etc. This is the opportunity to present a list of "must have" criteria for the ideal solution, and to indicate which criteria may be negotiable, and to what extend those criteria are negotiable. This is also an opportunity to indicate how the performance of a solution will be measured.

9) Challenge set up. This section is where contact information is provided for the individual overseeing the challenge and where a timeline is indicated for when solutions should be submitted. The person setting up the challenge has the opportunity to set the timeline with hard or soft deadlines as desired or appropriate for the project underlying the challenge.

Projects may also be set up as "tech-push" challenges, where the project describes what a specific technology is capable of. The challenge is then set up to find an application or problem for which the specific technology represents the solution.

The project description is then assigned 105 project categorizations. The project categorizations serve as meta data for the project description and are useful in matching up the unmet technical needs included in the project description with participating experts who may be able to assist in solving the problems posed by the unmet technical needs. The project categorizations may be assigned using one or more of several processes. A first option is to directly adopt the project categorizations from the parameters describing the unmet technical needs. Direct adoption is facilitated if the parameters describing the unmet technical needs are drawn from a set of pre-existing technical categories. Another option is have the personnel providing the project description to select from a list of categorizations which may be developed through input from the umbrella organizations various business units and through input from the participating experts themselves. The categorizations may also be developed through automated processes, such as by mining technical documents for key technical terms based on the frequency of use within the documents and/or assigning a ranking system to word usage. Such methods are frequently employed by Internet search engines when crawling and ranking web pages for relevancy to search queries, and as such the technology is already well-known to those of skill in the art. A third option is to manually assign project categorizations by having personnel review each project description and the accompanying unmet technical needs.

The project categorizations may also be organized in genus and species hierarchies, with branches of the hierarchy being linked by relationships between descriptive terms, concepts, and/or technologies. By organizing the project categorizations in this manner, matching up experts with projects may be performed by also looking to related project categories within the same branch, or even on a related branch, of the hierarchy that contains a project categorization. For example, if a project categorizations includes "dogs" as a category, that project might also bear a relationship to projects having project categorizations of "cats", "domesticated animals", and other similar categorizations that fall within the genus and species hierarchy in which "dogs" is also included.

Either before or after project categorizations are assigned 105, the project description is posted 107 to the network so that it is fully accessible to the participating experts. The posting 107 is preferably achieved by displaying database contents on an intranet web site accessible only from within the limits of the umbrella organization's network. As an option, the umbrella organization may wish to identify trusted business partners which may be granted access to the solution network for both submitting project descriptions and granting experts access to the system.

With the project categorizations assigned to the project description, participating experts are identified 109 by correlating project categorizations with expert categorizations. The expert categorizations are generated from information that is known or can be implicitly determined about each expert, and are preferably maintained in a database of participating experts. Like the project categorizations, the expert categorizations may be mined from written material associated with the expert, and also like the project categorizations, a ranking system may be applied to the expert categorizations. For example, the written material may include one or more of the curriculum vitae for each expert, publications by each expert, work history of each expert, among other things. The expert categorizations may also be selected by the experts themselves when setting up an expert profile, so that each chooses technologies for which they feel they have a suitable knowledge base. In selecting expert categorizations, an expert is expressing technology areas in which they are interested in participating.

The expert categorizations may also be created by monitoring an expert's written interaction with others and/or with one or more technical literature resources. The categorizations may be created by identifying topics an expert discusses with others and/or reads about in the technical literature. The expert categorizations may also be added to by comparing expert profiles and identifying similarities between expert profiles. Experts with similar profiles may be assumed, at least initially, to have similar interests and/or capabilities in related technology areas.

Expert categorizations associated with any expert may be automatically updated by the system. For example, if an expert repeatedly declines to participate in a project matched up with a particular categorization, that categorization may be removed from or black listed in that expert's profile. Also, through interaction with the system, for example by participating in projects, and/or by the system continuing to monitor an expert's writings, reading material, and other materials associated with the expert, the system can update and generate a more up-to-date and complete profile for each expert.

Aspects of social networking may also be incorporated into the system to aid in identifying an expert's interests and assigning expert categorization. For example, an expert may be permitted to set up filters themselves to block or better identify certain categories of projects, or they may be permitted to endorse a project as being interesting without actually participating as an expert in that particular project. When an expert endorses a project, the categorizations for that project may be used to inform and update that expert's expert categorizations.

An expert may also be presented with a project that does not have a project categorization closely matching one of the expert categorizations in that expert's profile. This may be done as a way of expanding that expert's profile by assigning new expert categorizations. For example, if an out-of-match project is presented to an expert, and that expert decides to participate in that project, then the project categorizations may be used to update the expert's categorizations. Alternatively, if the expert chooses not to participate in that project, then the project categorizations may be added to a black list for that expert's profile, especially if the expert has declined similarly categorized projects multiple times.

The expert categorizations may also be organized in genus and species hierarchies, and experts with assigned expert categorizations may be presented with projects which have project categorizations matching up within the branch, or even a related branch, of the hierarchy that contains an expert categorization within the expert's profile. For example, if an expert's expert categorizations includes "dogs" as a category, that expert might also be presented with projects having project categorizations of "cats", "domesticated animals", and other similar categorizations that fall within the genus and species hierarchy in which "dogs" is also included.

As indicated, expert categorizations may be determined and assigned based on the type of interactions an expert has with others and with the system and by the type and level of expertise the expert demonstrates on a specific topic. In addition, the expert categorizations may be assigned a ranking indicative of a level of expertise. By way of example:

- reading about a subject shows interest in that subject.

- expressing an interest in a challenge on a subject, without actually discussing it, shows interest and engagement with that subject.

- commenting on or discussing a challenge about a particular subject shows interest in and at least some knowledge about that subject.

- submitting an idea in response to a challenge about a first subject, where that idea shows an expertise in a second subject, shows an interest in the first and a more profound knowledge of the second subject.

- discussing and submitting ideas in response to a challenge may result in an expert being generally classified as a problem solver.

- by forwarding a challenge to a second expert, and where that second expert subsequently submits an idea in response to the challenge may result in an expert being generally classified as a networker.

Through these types of expert classifications and rankings, the system can create a diagram identifying experts who are potential dead-ends on certain topics, and which experts are the gateways, solvers, and networkers. By ranking experts, and expert categorizations, in this or in any other manner, the process of distributing a challenge in a network can be made more efficient, so that the challenge reaches the right experts more quickly and avoids being perceived as unwanted, unsolicited messages (SPAM).

The correlation in identifying 109 participating experts may be performed in many different ways, one simple example is identifying how many project categorizations match up with the expert categorizations for participating experts. More complex analysis of the matching respective categorizations may also be performed. For example, if a ranking system is applied to one or both of the project categorizations and the expert categorizations, more complex analysis may be performed to achieve higher correlation between the unmet technical needs of the project description and the participating experts having applicable knowledge. Again, this sort of analysis is quite similar to ranking systems in use by search engines, and as such is known to those of skill in the art.

Once participating experts who have expertise potentially relevant to the project description have been identified 109, then those experts are actively notified 111 by the system about the posted project description. Notification may take one or more routes, the simplest of which is having the system email a notice to identified participating experts. Any other form of direct or indirect communication may be used to notify participating experts who have been identified as having potentially relevant knowledge. In addition, other methods of notification may be used in order to better spread the word about the posting of the project description. For example, the managers of identified participating experts may be notified in an effort to encourage participation, or steps may be taken to notify other participating experts within the business group or business unit of an identified expert, or if identified experts are expected to be attending a business meeting within their business group or business unit, an announcement about the posting of the project description may be made at that meeting by notifying the organizer of the meeting.

With the project description posted 107 and identified experts notified 111, proposed solutions are received 113 by the network and forwarded to the individual or group who created the project description for consideration. The proposed solutions may be discussed freely between the personnel receiving the proposals and the experts providing them, as monetary compensations are not a concern within the confines of the umbrella organization and, in most instances, there will also be no concern about risking public disclosure of the project or the proposed solutions to the unmet technical needs.

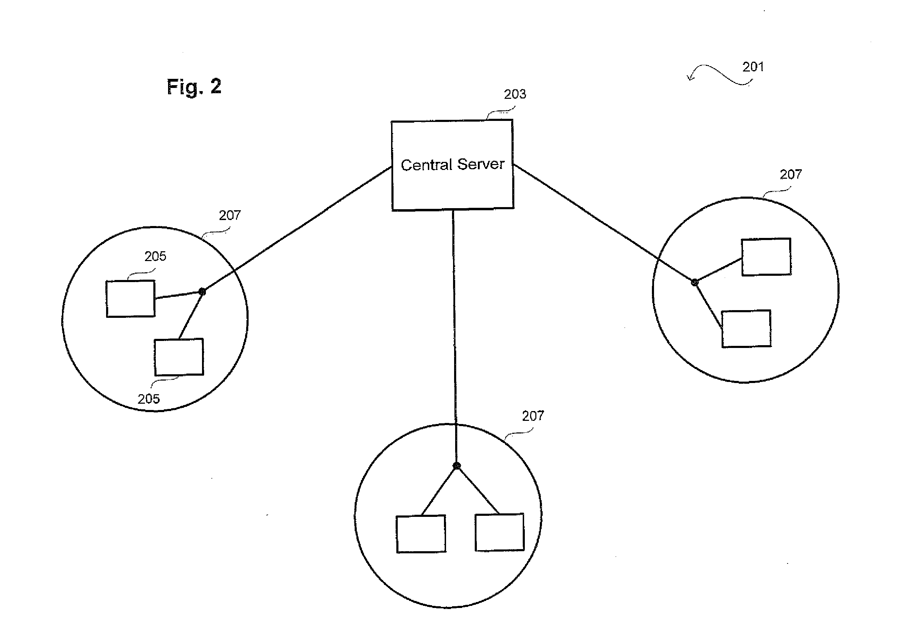

An innovation exchange network 201 having a central server 203 is illustrated in Fig. 2. In this style of exchange network 201, the central server 203 is a repository of the database for project descriptions and the database for the participating experts, and all data associated with those descriptions and experts, including the metadata that is generated. The central server 203 resides within the control of the umbrella organization, regardless of where the server physically resides. Access points 205 within each business unit 207 are networked to enable communications with the central server 203, thereby allowing project descriptions to be sent to the central server and allowing participating experts to set up their own profile and access the posted project descriptions. The central server 203 preferably provides access to the information in the databases by serving the information as part of web pages accessible through a private network within the umbrella organization.

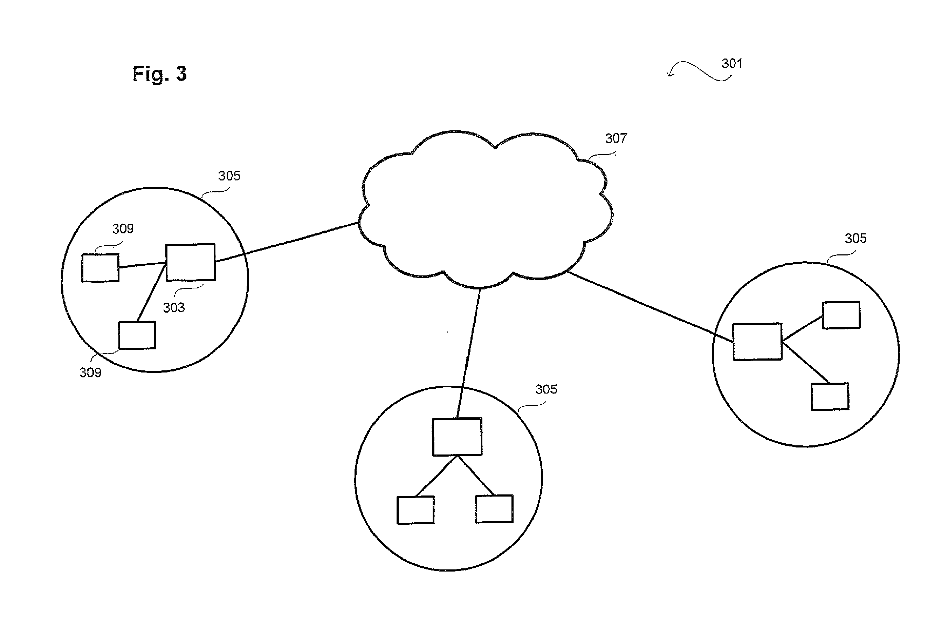

An innovation exchange network 301 that has a distributed computing model, using a plurality of network servers 303, is illustrated in Fig. 3. In this network, each business unit 305 within the umbrella organization has at least one network server 303 that communicates with an internal network 307 of the umbrella organization. Again, access points 309 within each business unit 305 are networked to respective network servers 303, thereby allowing project descriptions to be received and shared by and between the various network servers 303. Such distributed computing models are well known and understood to those of ordinary skill in the art. Essentially, any network model can be used to host an innovation exchange network, with the particular implementation being a matter of how the umbrella organization and its various business units are organized and what design choices are preferred for the network.

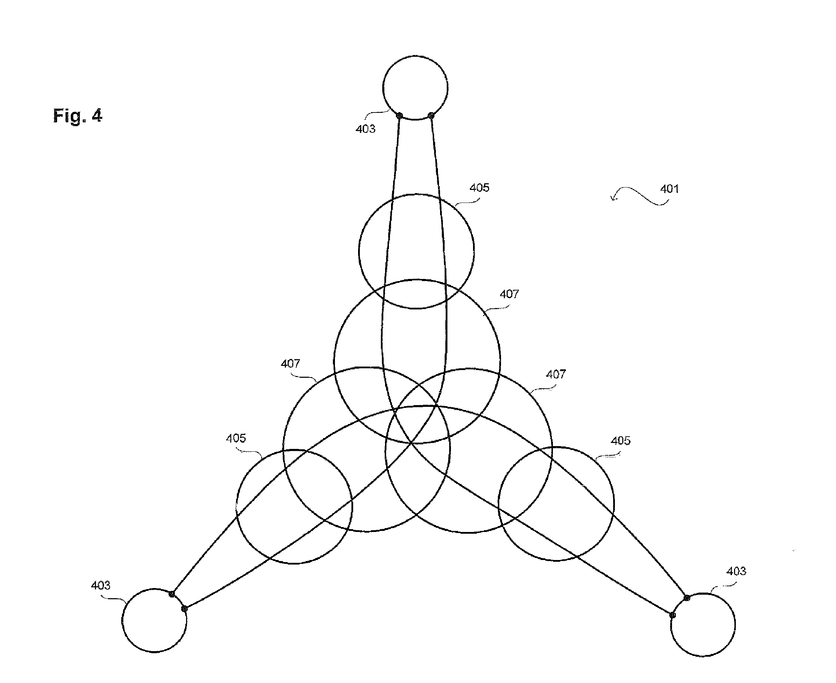

An organizational view of an innovation exchange network 401 is illustrated in Fig. 4. The circles at the periphery represent customers 403, which are the driving motivation behind technological needs and solutions implemented for solving those needs. Each customer 403, is connected to the umbrella organization through the experts 405 of each respective business unit 407, and the sum of the experts 405 and the business units 407 form the umbrella organization. Each customer 403, and their respective unmet technological needs, is also loosely connected to other customers and the technology implementations that have already been carried out for other customers. Thus, when one customer 403 has a technological need, and the associated experts 405 have identified and defined that need, then the umbrella organization serves to connect the disparate business units through the innovation exchange network so that technological knowledge that is already in use for a customer associated with one business unit can be matched up with the need of another customer associated with a different business unit.

Similarly, the "umbrella organization" may also be a loose affiliation of companies, each having their own business units. In such an implementation, access to the network would be restricted to the affiliated companies and their business units. This enables any company to team up with other companies, which are preferably non-competing and complementary, to offer a broad portfolio of solutions to all the participants' customers. For example, a chemical company could team up with an engineering company and an electronic device company to implement such a solution network. It is also possible to include non-technical companies within the group of participants, such as venture capitalists. This enables, for example, the participating chemical company to solve a customer's problem by employing solutions that extend beyond the company's core competencies, thus turning the chemical company into a "one stop innovation shop". Any intellectual property developed as a result of such affiliations may be handled in any way the participants deem appropriate, from treating the network as a joint venture, so that all intellectual property is jointly owned, to establishing an umbrella organization to own and license any developed intellectual property.

Preferably, a network across multiple companies is established so that all participants have access rights to all parts of the network, even though each participant may be providing proprietary equipment as part of the innovation exchange network. Even so, technologies from outsider, i.e. not "trusted", partners may be transferred into the system in order to provide a solution to an unmet technological need. For example, a representative of a trusted partner is aware of a challenge and aware that proprietary technology from a customer might serve well to meet the technical needs of that challenge. That representative can connect the technology to the unmet need by participating in the challenge, effectively importing the technological solution into the system, even though the customer is not a trusted partner.

Through implementation of the innovation exchange network, the network itself can help produce additional intellectual property by combining existing know-how with unmet technological needs. Flowing from the connection of knowledge with need, additional royalties and product sales may also be generated. The business units involved in making these connections will, as a result, increase their own productivity revenue, thus showing an increase in overall value for the umbrella organization. The innovation exchange network may also provide distinct advantages to customers working with business units of an umbrella organization implementing such a network, as the customer can gain the benefit of technological knowledge throughout the entire organization, as opposed to just that knowledge residing within the business unit working on the customer's project.

Particularly, a customer looking for a simple, and ideally inexpensive, solution to a technical problem may be provided with just that through such an innovation exchange network, as the solution just such a simple, elegant solution may be found through one of the other business units or other trusted partner within the network. In addition, the business unit or trusted partner which introduces the technology solution to the customer gains a new application for current technology, which should in turn lead to business growth opportunities above and beyond the initial project. As indicated above, the technology solutions to the projects may generate new intellectual property by introducing existing technologies to new applications. Similarly, business growth opportunities and generation of IP may provide unconventional access to new markets without need for the traditional investment into sales infrastructure. This may give rise to a business model that goes beyond quantity, price, and product mix. Instead, through the brokering of connections (connecting projects with experts, and through the experts, technologies), value is created. This value can be internalized through one-time brokering fees, a flat rate brokering fee, and/or royalties on any generated intellectual property.

Thus, a method and system for matching technical needs to solutions are disclosed. While embodiments of this invention have been shown and described, it will be apparent to those skilled in the art that many more modifications are possible without departing from the inventive concepts herein. The invention, therefore, is not to be restricted except in the spirit of the following claims.

## Claims

1. A method for matching technical needs to solutions, the method comprising:
receiving, at an innovation exchange network, a project description having at least one unmet technical need, wherein the unmet technical need is described by a plurality of parameters;
assigning, via an innovation exchange network, project categorizations to the project description based on the project description and the parameters;
posting, on the innovation exchange network, the project description for review by participating experts;
identifying, using the innovation exchange network, one or more of the participating experts having expertise potentially relevant to the project description based upon the assigned project categorizations;
notifying, by the innovation exchange network, the identified participating experts of the posted project description; and
receiving, via the innovation exchange network, a proposed solution to the unmet technical need from one or more of the participating experts.

2. The method of claim 1, further comprising maintaining a database of expertise for each of the participating experts.

3. The method of claim 2, wherein the database of expertise comprises assigned expert categorizations for each participating expert.

4. The method of claim 3, wherein the assigned expert categorizations for a first expert are based upon one or more of the curriculum vitae for the first expert, publications by the first expert, work history of the first expert, and categorizations selected by the first expert.

5. The method of claim 1, wherein the innovation exchange network is hosted on a centralized server.

6. The method of claim 1, wherein the innovation exchange network is hosted by a distributed network.

7. The method of claim 1, wherein notifying one or more of the participating experts includes notifying all participating experts in a select business group.

8. The method of claim 1, wherein notifying one or more of the participating experts includes notifying all participating experts attending a select meeting.

9. The method of claim 1, wherein notifying one or more of the participating experts includes notifying all participating experts from a trusted business partner.

10. The method of claim 1, wherein notifying one or more of the participating experts includes notifying a manager of one or more of the identified participating experts.

11. A system for matching technical needs to solutions, the system comprising:
a computer network of one or more servers, configured to communicate with each of a plurality of business networks, each business network being operated by one of a business group or business unit, each being within an umbrella organization, wherein the network of one or more servers is configured to:
receive a project description having at least one unmet technical need, wherein the unmet technical need is described by a plurality of parameters;
assign project categorizations to the project description based on the project description and the parameters;
post the project description for review by participating experts;
identify one or more of the participating experts having expertise potentially relevant to the project description based upon the assigned project categorizations;
notify the identified participating experts of the posted project description; and
receive a proposed solution to the unmet technical need from one or more of the participating experts.

12. The system of claim 11, wherein the one or more servers are configured to host a database including a plurality of received projects, associated parameters for each received project, assigned project categorizations for each received project, and expertise for each participating expert.

13. The system of claim 12, wherein the database further includes assigned expert categorizations for each participating expert.

14. The system of claim 13, wherein the assigned expert categorizations for a first expert are based upon one or more of the curriculum vitae for the first expert, publications by the first expert, work history of the first expert, and categorizations selected by the first expert.

15. The system of claim 12, wherein the one or more servers comprise a centralized database server hosting the database.

16. The system of claim 12, wherein the one or more servers comprise a plurality of servers operating as a distributed network hosting the database across the distributed network.

17. The system of claim 11, wherein the network of one or more servers is configured to notify the identified participating experts by also notifying all participating experts in a select business group and/or or business unit.

18. The system of claim 11, wherein the network of one or more servers is configured to notify the identified participating experts by also notifying all participating experts attending a select meeting.

19. The system of claim 11, wherein the network of one or more servers is configured to notify the identified participating experts by also notifying all participating experts from a trusted business partner.

20. The system of claim 11, wherein the network of one or more servers is configured to notify the identified participating experts by also notifying a manager of one or more of the identified participating experts.
